# EUROPEAN PATENT APPLICATION

(11) **EP 3 327 977 A2**
(43) Date of publication of application: **30.05.2018**
(21) Application number: 17197888.5
(22) Date of filing: 24.10.2017
(51) Int. Cl.: H04L 5/00, H04L 27/00, H04W 16/14, H04L 1/00

(54) **METHODS AND APPARATUSES FOR USE OF GUARD BANDS SUPPORTING MIXED NUMEROLOGY USE IN NEW RADIO**

(30) Priority: 04.11.2016 US 201662417715 P
(71) Applicant: Nokia Technologies Oy, 02610 Espoo (FI)
(72) Inventor: HAKOLA, Sami-Jukka, 90450 Kempele (FI); TIIROLA, Esa Tapani, 90450 Kempele (FI); KAIKKONEN, Jorma Johannes, 90800 Oulu (FI); PAJUKOSKI, Kari Pekka, 90240 Oulu (FI); RANTA-AHO, Karri Markus, 02600 Espoo (FI)
(74) Representative: Nokia EPO representatives

(57) **Abstract**

Systems, methods, apparatuses, and computer program products for use of guard bands supporting mixed numerology use in new radio (NR) are provided. A method is provided that comprises receiving, by a user equipment, higher layer configurations about a sub-band raster and/or a numerology plan over sub-bands for a downlink and an uplink; receiving a higher layer or a physical layer indication about a used configuration for the downlink and/or the uplink; receiving a physical layer downlink resource allocation and/or receiving a physical layer uplink resource allocation; determining applied guard bands for a reception of downlink data based on at least one of allocated resources, an explicit guard band indication, a modulation and coding scheme level and the current higher layer sub-band and numerology plan configurations; and determining applied guard bands for a transmission of uplink data based on at least one of the allocated resources, the explicit guard band indication, an uplink transmit power, the modulation and coding scheme level and the current higher layer sub-band and numerology plan configurations.

## Description

### BACKGROUND:

### Field:

Embodiments of the invention generally relate to wireless or mobile communications networks, such as, but not limited to, the Global System for Mobile Communications (GSM)/Enhanced Data rates for GSM Evolution (EDGE) radio access network (GERAN), the Universal Mobile Telecommunications System (UMTS) Terrestrial Radio Access Network (UTRAN), Long Term Evolution (LTE) Evolved UTRAN (E-UTRAN), LTE-Advanced (LTE-A), LTE-A Pro, narrow band internet of things (NB-IoT), and/or 5G radio access technology or new radio access technology (NR). Some embodiments may generally relate to 5G or new radio (NR) physical layer design and, more specifically, may relate to guard bands arrangement related to mixed numerology.

### Description of the Related Art:

Global System for Mobile Communications (GSM) is a standard initially developed by the European Telecommunications Standards Institute (ETSI) and later by the 3^{rd} Generation Partnership Project (3GPP) to describe the protocols for second-generation digital cellular networks used by mobile phones. The GSM standard originally described a digital, circuit-switched network optimized for full duplex voice telephony. GSM was enhanced over time to include data communications by circuit-switched transport and then by packet data transport via General Packet Radio Services (GPRS) and Enhanced Data rates for GSM Evolution (EDGE or EGPRS). Subsequently, 3GPP developed third-generation UMTS standards followed by fourth-generation LTE-Advanced standards.

Universal Mobile Telecommunications System (UMTS) Terrestrial Radio Access Network (UTRAN) refers to a communications network including base stations, or Node Bs, and for example radio network controllers (RNC). UTRAN allows for connectivity between the user equipment (UE) and the core network. The RNC provides control functionalities for one or more Node Bs. The RNC and its corresponding Node Bs are called the Radio Network Subsystem (RNS). In case of E-UTRAN (enhanced UTRAN), no RNC exists and radio access functionality is provided by an evolved Node B (eNodeB or eNB) or many eNBs. Multiple eNBs are involved for a single UE connection, for example, in case of Coordinated Multipoint Transmission (CoMP) and in dual connectivity.

Long Term Evolution (LTE) or E-UTRAN refers to improvements of the UMTS through improved efficiency and services, lower costs, and use of new spectrum opportunities. In particular, LTE is a 3GPP standard that provides for uplink peak rates of at least, for example, 75 megabits per second (Mbps) per carrier and downlink peak rates of at least, for example, 300 Mbps per carrier. LTE supports scalable carrier bandwidths from 20 MHz down to 1.4 MHz and supports both Frequency Division Duplexing (FDD) and Time Division Duplexing (TDD).

As mentioned above, LTE may also improve spectral efficiency in networks, allowing carriers to provide more data and voice services over a given bandwidth. Therefore, LTE is designed to fulfill the needs for high-speed data and media transport in addition to high-capacity voice support. Advantages of LTE include, for example, high throughput, low latency, FDD and TDD support in the same platform, an improved end-user experience, and a simple architecture resulting in low operating costs.

Certain releases of 3GPP LTE (e.g., LTE Rel-10, LTE Rel-11, LTE Rel-12, LTE Rel-13) are targeted towards international mobile telecommunications advanced (IMT-A) systems, referred to herein for convenience simply as LTE-Advanced (LTE-A).

LTE-A is directed toward extending and optimizing the 3GPP LTE radio access technologies. A goal of LTE-A is to provide significantly enhanced services by means of higher data rates and lower latency with reduced cost. LTE-A is a more optimized radio system fulfilling the international telecommunication union-radio (ITU-R) requirements for IMT-Advanced while maintaining backward compatibility. One of the key features of LTE-A, introduced in LTE Rel-10, is carrier aggregation, which allows for increasing the data rates through aggregation of two or more LTE carriers.

5^{th} generation wireless systems (5G) refers to the new generation of radio systems and network architecture. 5G, or 5G new radio (NR), is expected to provide higher bitrates and coverage than the current LTE systems. Some estimate that 5G will provide bitrates one hundred times higher than LTE offers. 5G is also expected to increase network expandability up to hundreds of thousands of connections. The signal technology of 5G is anticipated to be improved for greater coverage as well as spectral and signaling efficiency. 5G is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. Narrowband IoT (NB-IoT) is envisioned to operate on 180/200 kHz channel. The deployment of NB-IoT may be in-band LTE, a guard band to LTE, UMTS or other system as well as standalone on a specific carrier.

### SUMMARY

In a first aspect thereof the exemplary embodiments of this invention provide a method that comprises receiving, by a user equipment, higher layer configurations about a sub-band raster and/or a numerology plan over sub-bands for a downlink and an uplink;

Receiving a higher layer or a physical layer indication about a used configuration for the downlink and/or the uplink; receiving a physical layer downlink resource allocation and/or receiving a physical layer uplink resource allocation; determining applied guard bands for a reception of downlink data based on at least one of allocated resources, an explicit guard band indication, a modulation and coding scheme level and the current higher layer sub-band and numerology plan configurations; and determining applied guard bands for a transmission of uplink data based on at least one of the allocated resources, the explicit guard band indication, an uplink transmit power, the modulation and coding scheme level and the current higher layer sub-band and numerology plan configurations.

In a further aspect thereof the exemplary embodiments of this invention provide an apparatus that comprises means for receiving, by the apparatus, higher layer configurations about a sub-band raster and/or a numerology plan over sub-bands for a downlink and an uplink; means for receiving a higher layer or a physical layer indication about used configuration for the downlink and/or the uplink; means for receiving a physical layer downlink resource allocation and/or receiving a physical layer uplink resource allocation; means for determining applied guard bands for a reception of downlink data based on at least one of allocated resources, an explicit guard band indication, a modulation and coding scheme level and the current higher layer sub-band and numerology plan configurations; and means for determining applied guard bands for a transmission of uplink data based on at least one of the allocated resources, the explicit guard band indication, an uplink transmit power, the modulation and coding scheme level and the current higher layer sub-band and numerology plan configurations.

In another aspect thereof the exemplary embodiments of this invention provide a method that comprises signaling to at least one user equipment higher layer configurations about a sub-band raster and/or a numerology plan over sub-bands for a downlink and an uplink; signaling to the at least one user equipment a higher layer or a physical layer indication about the used configuration for the downlink and/or the uplink; signaling a physical layer downlink resource allocation and/or to signal a physical layer uplink resource allocation to the at least one user equipment; and signaling to the at least one user equipment a use of guard bands within allocated frequency resources for a reception of downlink data and a transmission of uplink data.

In yet another aspect thereof the exemplary embodiments of this invention provide an apparatus that comprises means for means for signaling to at least one user equipment higher layer configurations about a sub-band raster and/or a numerology plan over sub-bands for a downlink and an uplink; means for signaling to the at least one user equipment a higher layer or a physical layer indication about the used configuration for the downlink and/or the uplink; means for signaling a physical layer downlink resource allocation and/or to signal a physical layer uplink resource allocation to the at least one user equipment; and means for signaling to the at least one user equipment a use of guard bands within allocated frequency resources for a reception of downlink data and a transmission of uplink data.

### BRIEF DESCRIPTION OF THE DRAWINGS:

For proper understanding of the invention, reference should be made to the accompanying drawings, wherein:
Fig. 1 illustrates an example of a resource block (RB) grid;
Fig. 2 illustrates an example of a frequency domain arrangement with 20 MHz NR carrier;
Fig. 3 illustrates examples of numerology configurations, according to certain embodiments;
Fig. 4 illustrates an example of a flow diagram of a method, according to one embodiment;
Fig. 5 illustrates an example of a resource allocation for 3 simultaneously scheduled UEs, according to an embodiment;
Fig. 6 illustrates an example of a flow diagram of a method, according to another embodiment;
Fig. 7a illustrates a block diagram of an apparatus, according to one embodiment; and
Fig. 7b illustrates a block diagram of an apparatus, according to another embodiment.

### DETAILED DESCRIPTION:

It will be readily understood that the components of the invention, as generally described and illustrated in the figures herein, may be arranged and designed in a wide variety of different configurations. Thus, the following detailed description of the embodiments of systems, methods, apparatuses, and computer program products for use of guard bands supporting mixed numerology use in new radio (NR), is not intended to limit the scope of the invention but is representative of selected embodiments of the invention.

The features, structures, or characteristics of the invention described throughout this specification may be combined in any suitable manner in one or more embodiments. For example, the usage of the phrases "certain embodiments," "some embodiments," or other similar language, throughout this specification refers to the fact that a particular feature, structure, or characteristic described in connection with the embodiment may be included in at least one embodiment of the present invention. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more embodiments.

Additionally, if desired, the different functions discussed below may be performed in a different order and/or concurrently with each other. Furthermore, if desired, one or more of the described functions may be optional or may be combined. As such, the following description should be considered as merely illustrative of the principles, teachings and embodiments of this invention, and not in limitation thereof.

Certain embodiments of the invention relate to 3GPP new radio (NR) physical layer development. More specifically, some embodiments relate to the guard bands arrangement related to mixed numerology. It should be noted that, as described herein, new radio (NR) may refer to a 5G system or other next generation (i.e., post-LTE) communications system or radio access technology.

An objective of the NR study item RP-160671, entitled *"Study on New Radio Access Technology",* is to identify and develop technology components needed for NR systems being able to use any spectrum band ranging at least up to 100 GHz. A goal is to achieve a single technical framework addressing all usage scenarios, requirements and deployment scenarios defined in 3GPP TR38.913, *"Study on Scenarios and Requirements for Next Generation Access Technologies".*

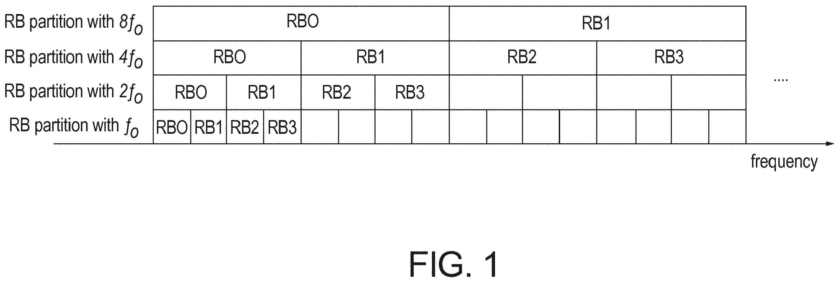

Certain agreements and working assumptions have been reached in 3GPP with respect to NR. For example, it has been agreed that forward compatibility of NR shall ensure smooth introduction of future services and features with no impact on the access of earlier services and UEs. Multiplexing different numerologies within a same NR carrier bandwidth (from the network perspective) is supported, and frequency division multiplexing FDM and/or time division multiplexing (TDM) can be considered. It has also been agreed that, in one carrier when multiple numerologies are time domain multiplexed: resource blocks (RBs) for different numerologies are located on a fixed grid relative to each other, and, for subcarrier spacing of 2ⁿ * 15kHz, the resource block (RB) grids are defined as the subset/superset of the RB grid for subcarrier spacing of 15kHz in a nested manner in the frequency domain. Fig. 1 illustrates an example of an RB grid. It is noted that the numbering in Fig. 1 represents just one possible example.

Although the FDM case has been left for future study, it is assumed that an RB grid for FDM will be adopted as was agreed for TDM. It has been further agreed that study will continue as to whether or how to support guard-band for inter-subband interfering scenarios with considerations of the specification/performance impact.

The intra-carrier guard band between sub-bands of different numerologies could be arranged by scheduling empty resource groups (physical resource blocks (PRBs) or groups of PRBs) where guard is needed and/or by creating the guard within the edge PRBs or PRB groups, where needed.

Assuming that an NR carrier supports 12 subcarrier-PRB, the number of PRBs/carrier is in the range of ∼100-140 depending on how many subcarrier of the Fast Fourier Transform (FFT) will be utilized. Scheduling at a PRB granularity would seem to be excessive due to high signaling overhead (each PRB would need to be indicated independently) and the somewhat unlikely need for chopping the carrier in pieces under 1% for scheduling. Hence, grouping PRBs to facilitate scheduling would appear beneficial. Further, it is possible to group PRBs of different numerologies in such a way that they occupy the same bandwidth (as opposed to same number of PRBs), leading to the same scheduling overhead on a given carrier bandwidth (BW) regardless of the numerology used. This fixed-bandwidth PRB group is called a Resource Block Group (RBG).

Now, a 12-subcarrier wide intra-carrier guard may be considered unnecessarily wide, even if the overhead would in a full carrier be just around 1% per guard. If the scheduling is, however, taking place in granularity of, e.g., 4-PRB-wide RBG, the guard overhead would already be 4% per guard. Further, if more than one guard is needed on a more regular basis, the overhead of scheduled guard may be overly excessive. Intuitively it appears that the need for the number of guards in a carrier should be minimized by placing the allocations using the same numerology (and not needing guard band) next to each other.

It is expected that both localized and clustered transmission schemes will be needed in NR in mixed numerology configuration. In the context of a particular device (e.g., UE) that is scheduled in downlink (DL) or in uplink (UL), the device is only aware of its own allocation and its numerology (in addition to possible presence of other common signals). As the presence of different numerologies on adjacent (or nearby blocks) could lead to different requirements from radio frequency (RF) perspective (needed filtering, etc.), it would be beneficial for the UE to be aware of the situation.

Therefore, an embodiment addresses the problem of efficient use of frequency resources in the configuration where multiple numerologies may be multiplexed in frequency domain by controlling the leakage power from one numerology to another. In other words, certain embodiments provided the needed efficient configuration and signalling mechanisms.

By defining a group of resource block groups (N-RBG), the minimum granularity can be defined in which the different numerologies can coexist in frequency over a given time-instant in one carrier. This effectively defines a sub-band within a carrier. Since the N-RBGs are larger groups of resource blocks with identical numerology, they reduce guard band residual inter-carrier interference as compared to having different numerology for each resource. The N-RBG can be defined according to the following: only one numerology can be applied within one N-RBG, different (or same) numerologies can be applied for different N-RBGs, N-RBG granularity is used when coordinating interference and usage of different numerologies among neighboring cells, or N-RBG includes inbuilt support for guard band (when needed).

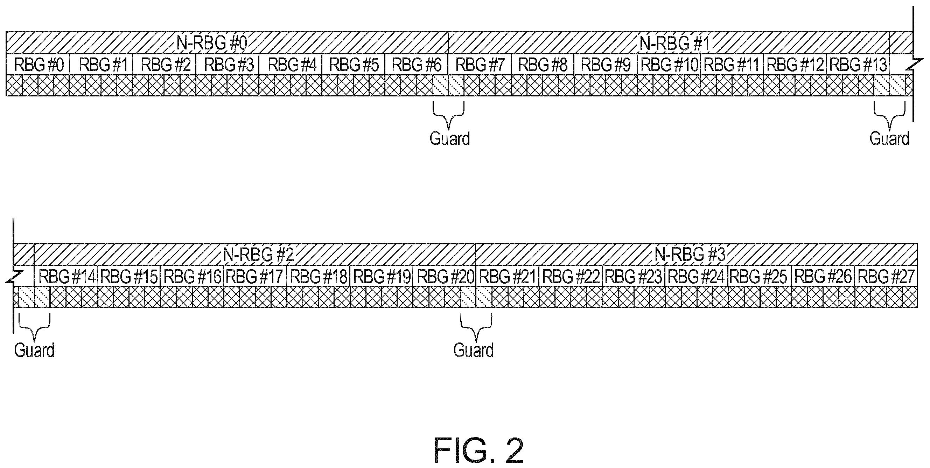

Fig. 2 illustrates an example of a frequency domain arrangement with 20 MHz NR carrier. In the example of Fig. 2: a PRB is comprised of 12 subcarriers, an RBG is of 720 kHz (4 PRBs of 15 kHz SCS or 1 PRB of 60 kHz SCS), an N-RBG is of 5040 kHz and includes 7 RBGs (N-RBG size could be configurable, and not all N-RBGs need to contain the same number of PRBs), all PRBs in one N-RBG use the same numerology at any given time-instant but the used numerology could change over time, and an N-RBG can include guard tones in the left-most PRB, the right-most PRB or both, according to need.

According to an embodiment, a UE may be configured, via higher layer configuration, the sub-band specific raster in frequency domain that indicates to the UE where there are possible borders between different numerologies requiring potentially guard bands. In certain embodiments, there may be a set of different configurations for the UE.

In one embodiment, different configurations may correspond to certain UE operating bandwidth configurations in cases the UE does not operate with the same bandwidth as the NR carrier. In this embodiment, when serving UE in different frequency regions of the NR carrier the UE may be signaled the used configuration from the set of different configurations.

In another embodiment, different configurations may correspond to different multi-numerology sub-band arrangement within the NR carrier. These may be cell specific configurations, as well as UE specific configurations. The base station (BS) may signal the UE(s) the configuration to be applied.

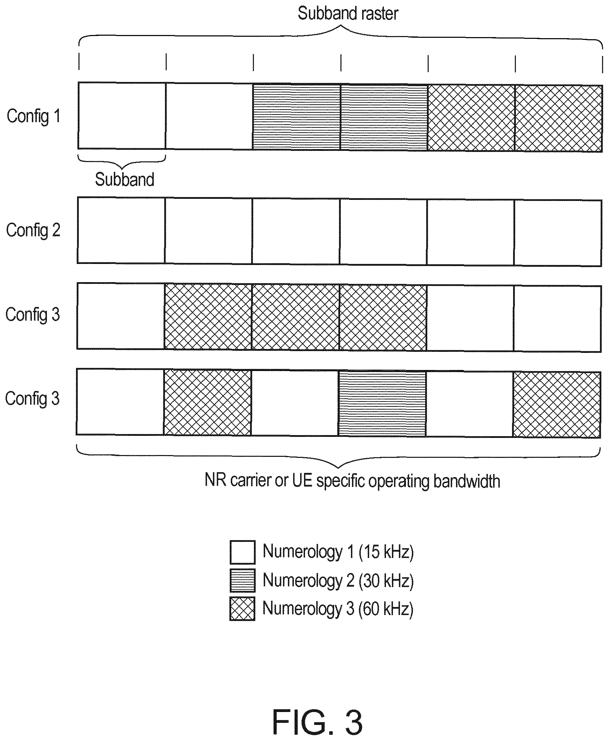

According to some embodiments, there may be the same or different configurations for downlink and uplink. In an embodiment, the higher layer configuration may be time varying so that a UE is provided with different configuration for different time instants (for example to differentiate time instants where common signals/channels are sent from time instants where only data is sent). Fig. 3 illustrates examples of numerology configurations, according to certain embodiments of the invention. It is noted that, although not shown in Fig. 3, the size of sub-bands may vary from sub-band to sub-band, and also from configuration to configuration.

According to one embodiment, the UE may be signalled or the UE may derive the use of guard bands within allocated frequency resources for the reception of downlink data and transmission of uplink data. If a UE is allocated frequency resources region next to the sub-band border where, according to the above-described configuration, the numerology would change in adjacent frequency resources (i.e., adjacent sub-band), the BS may explicitly indicate in downlink control information (DCI) scheduling the downlink transmission and/or uplink transmission whether or not the guard band is applied on the edge subcarriers of the allocation next to the sub-band border (if applied, guard band may be arranged according to pre-defined rules or higher layer configuration).

In an embodiment, in both downlink and uplink transmission, the UE may derive implicitly whether or not use guard band on the sub-band border where numerology would change according to higher layer configuration based on the modulation and coding scheme (MCS) information. There may be MCS specific guard band definitions, such as: QSPK modulation → no guard band, 16QAM/64QAM → N subcarriers guard band where subcarrier spacing may refer to pre-defined reference numerology (and subcarrier spacing).

In an embodiment, the BS may explicitly signal used guard band on the sub-band border where numerology may change. In one example, there may be reserved two bits in DCI for indication (per sub-band) where one bit refers to one edge of the allocation and the other bit refers to other edge of the allocation. These bits may be absent or not used by the UE if the allocation in frequency domain is covering the edge resources in the sub-band where numerology may change to another according to higher layer configuration. In another example, there may be a combination of one-bit indication that guard band is used and MCS information which indicates the amount of guards to be applied for DL reception or uplink transmission. In yet another example, explicit signalling may provide an opportunity in a dynamic manner, e.g., to overwrite higher layer configuration and allocate certain UE the whole bandwidth with one numerology, and the UE in that case does not need to apply guard bands on sub-band borders where numerology may change according to higher layer configuration.

Another embodiment may include especially related clustered resource allocation for the UE. In this embodiment, the BS may signal explicitly via DCI using, e.g., two-bit indication per cluster whether UE applies guards on the edges of each clustered allocation where one bit refers to one edge of the allocation and the other bit refers to other edge of the allocation of certain cluster. Alternatively, to limit overhead from two-bit indication per cluster, a common two-bit indication may be signalled to the UE which indicates whether or not the UE should apply accordingly guard band for each cluster if the cluster allocation is on the edge of the sub-band where numerology may change according to higher layer configuration. Yet another example is to dimension the higher layer signalling such that K+1 bits correspond to K sub-bands. In this example, bit-map signalling may indicate whether or not to apply guard band in at the subframe border (as discussed MCS can be used as another criterion). It may be redundant to cover the bandwidth edges by the signalling (since carrier may have inbuilt support for the guard band at the edges of carrier). In this case, K-1 bits are sufficient.

In one embodiment, guard bands may be dynamically selected only for UL/DL data channels. In other words, DL/UL control channels (such as PDCCH, PUCCH) overlapping with the sub-band boundaries may follow different functionality. For example, they may not apply guard band at all since they may use low(er) order of modulation. Another option is that DL/UL control channels apply guard band always. A motivation behind this option would be that the UE may not be aware of the guard band configuration at the time when receiving DL control channel or when transmitting via UL control channel.

The guard band may be a full PRB (physical resource block comprised of 12 sub-carriers), or one or several adjacent sub-carriers at one side of a PRB. The application of the guard band may be signalled dynamically or derived dynamically as described above, but in another embodiment, the usage of guard band may be configured by higher layers. This would be advantageous for certain band-edge cases where out-of-band protection needs to be provided or a narrower-than-nominal carrier BW is generated.

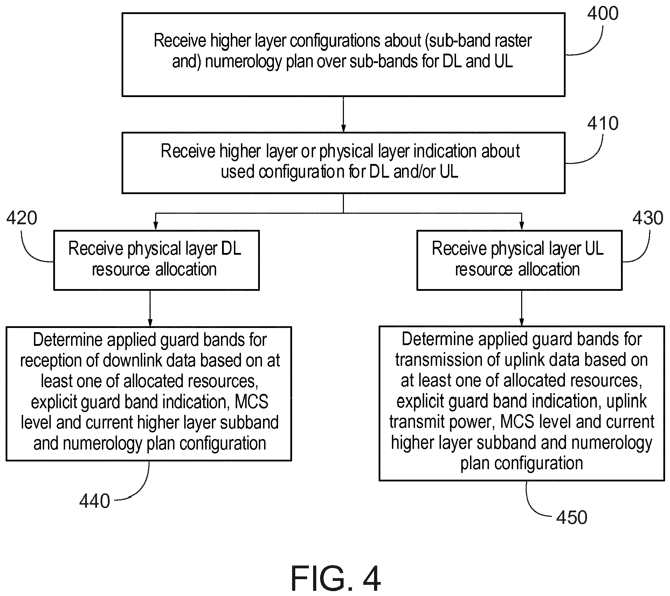

Fig. 4 illustrates an example of a flow diagram depicting a method for the use of guard bands supporting mixed numerology, according to one embodiment. In one example, the method of Fig. 4 may be performed at a UE or mobile device, for instance. The method may include, at 400, receiving higher layer configurations about (sub-band raster and) numerology plan over sub-bands for DL and UL. The configurations may be the same or different for DL and UL. The method may also include, at 410, receiving higher layer or physical layer indication about the used configuration for DL and/or UL. The method may then include, at 420, receiving physical layer DL resource allocation and, at 430, receiving physical layer UL resource allocation. At 440, the method may include determining applied guard bands for reception of DL data based on at least one of allocated resources, explicit guard band indication, MCS level and current higher layer subband and numerology plan configuration. At 450, the method may include determining applied guard bands for transmission of uplink data based on at least one of allocated resources, explicit guard band indication, uplink transmit power, MCS level and current higher layer subband and numerology plan configuration.

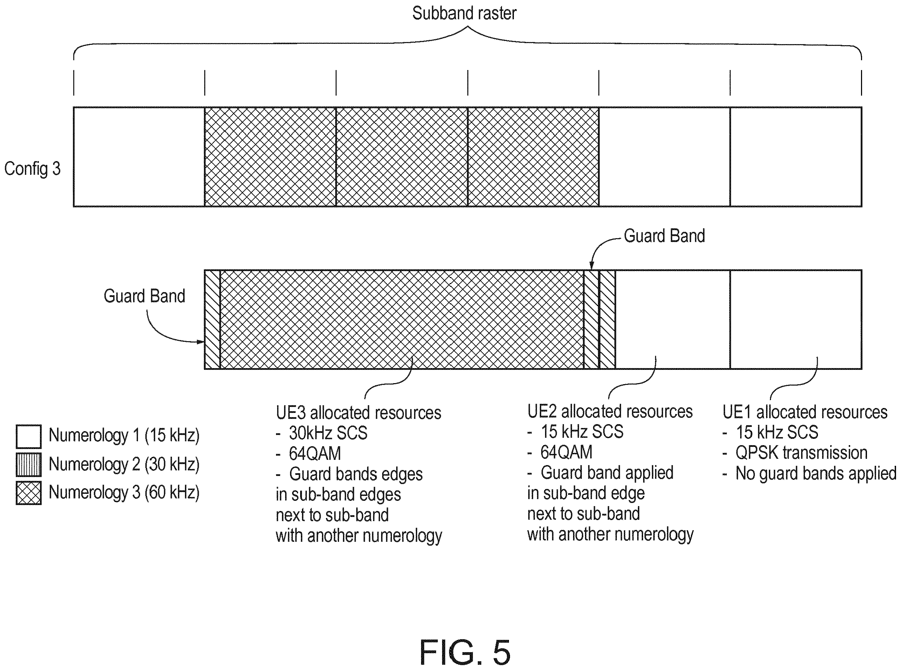

Fig. 5 illustrates an example of a resource allocation for 3 simultaneously scheduled UEs, which are denoted as UE1, UE2 and UE3, according to one example embodiment. In the example of Fig. 5, no guard bands are applied for UE1, guard band is applied in sub-band edge next to sub-band with another numerology for UE2, and guard bands are applied in sub-band edges next to sub-band with another numerology for UE3.

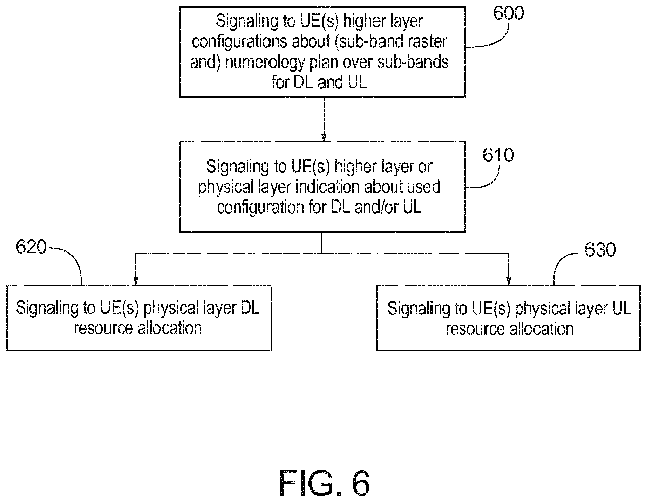

Fig. 6 illustrates an example of a flow diagram depicting a method for the use of guard bands supporting mixed numerology, according to one embodiment. In one example, the method of Fig. 6 may be performed at a base state, node B, eNB, or 5G access point, for instance. The method may include, at 600, signaling to one or more UE(s) higher layer configurations about (sub-band raster and) numerology plan over sub-bands for DL and UL. The configurations may be the same or different for DL and UL. The method may also include, at 610, signaling to the one or more UE(s) higher layer or physical layer indication about the used configuration for DL and/or UL. The method may then include, at 620, signaling physical layer DL resource allocation and, at 630, signaling physical layer UL resource allocation to the one or more UE(s).

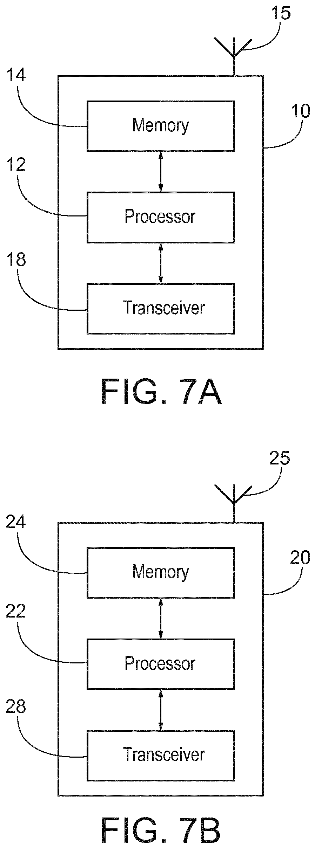

Fig. 7a illustrates an example of an apparatus 10 according to an embodiment. In an embodiment, apparatus 10 may be a node, host, or server in a communications network or serving such a network. For example, apparatus 10 may be a base station, a node B, an evolved node B, 5G node B or access point, WLAN access point, mobility management entity (MME), or subscription server associated with a radio access network, such as a GSM network, LTE network or 5G or NR radio access technology. It should be noted that one of ordinary skill in the art would understand that apparatus 10 may include components or features not shown in Fig. 7a.

As illustrated in Fig. 7a, apparatus 10 may include a processor 12 for processing information and executing instructions or operations. Processor 12 may be any type of general or specific purpose processor. While a single processor 12 is shown in Fig. 7a, multiple processors may be utilized according to other embodiments. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Processor 12 may perform functions associated with the operation of apparatus 10 which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink). As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly.

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

In one embodiment, apparatus 10 may be a network node or server, such as a base station, node B, eNB, 5G node B or access point, for example. According to certain embodiments, apparatus 10 may be controlled by memory 14 and processor 12 to perform the functions associated with embodiments described herein, such as (but not limited to) the flow chart depicted in Fig. 6. For example, in an embodiment, apparatus 10 may be controlled by memory 14 and processor 12 to configure and/or signal one or more UE(s), for example via higher layer configuration, with the sub-band specific raster in frequency domain that indicates to the UE(s) where there are possible borders between different numerologies potentially requiring guard bands. In certain embodiments, there may be a set of different configurations for the UE(s).

In one embodiment, the different configurations may correspond to certain UE operating bandwidth configurations when the UE does not operate with the same bandwidth as the NR carrier. In this embodiment, when serving UE in different frequency regions of the NR carrier, apparatus 10 may be controlled by memory 14 and processor 12 to signal the UE(s) the used configuration from the set of different configurations.

In another embodiment, the different configurations may correspond to different multi-numerology sub-band arrangement within the NR carrier. These may be cell specific configurations, as well as UE specific configurations. In this embodiment, apparatus 10 may be controlled by memory 14 and processor 12 to signal the UE(s) the configuration to be applied.

According to some embodiments, there may be the same or different configurations for downlink and uplink. In an embodiment, the higher layer configuration may be time varying so that a UE is provided with different configuration for different time instants (for example to differentiate time instants where common signals/channels are sent from time instants where only data is sent).

According to one embodiment, apparatus 10 may be controlled by memory 14 and processor 12 to signal the UE(s) the use of guard bands within allocated frequency resources for the reception of downlink data and transmission of uplink data. If a UE is allocated frequency resources region next to the sub-band border where, according to the above-described configuration, the numerology would change in adjacent frequency resources (i.e., adjacent sub-band), apparatus 10 may be controlled to explicitly indicate in downlink control information (DCI) scheduling the downlink transmission and/or uplink transmission whether or not the guard band is applied on the edge subcarriers of the allocation next to the sub-band border (if applied, guard band may be arranged according to pre-defined rules or higher layer configuration).

In an embodiment, in both downlink and uplink transmission, the UE may derive implicitly whether or not use guard band on the sub-band border where numerology would change according to higher layer configuration based on the modulation and coding scheme (MCS) information. There may be MCS specific guard band definitions, such as: QSPK modulation → no guard band, 16QAM/64QAM → N subcarriers guard band where subcarrier spacing may refer to pre-defined reference numerology (and subcarrier spacing).

In an embodiment, apparatus 10 may be controlled by memory 14 and processor 12 to explicitly signal the used guard band on the sub-band border where numerology may change. In one example, there may be reserved two bits in DCI for indication (per sub-band) where one bit refers to one edge of the allocation and the other bit refers to other edge of the allocation. These bits may be absent or not used by the UE if the allocation in frequency domain is covering the edge resources in the sub-band where numerology may change to another according to higher layer configuration. In another example, there may be a combination of one-bit indication that guard band is used and MCS information which indicates the amount of guards to be applied for DL reception or uplink transmission. In yet another example, explicit signalling may provide an opportunity in a dynamic manner, for example, to overwrite higher layer configuration and allocate a certain UE the whole bandwidth with one numerology, and the UE in that case does not need to apply guard bands on sub-band borders where numerology may change according to higher layer configuration.

In another embodiment, apparatus 10 may be controlled by memory 14 and processor 12 to signal explicitly via DCI using, e.g., two-bit indication per cluster whether a UE applies guards on the edges of each clustered allocation where one bit refers to one edge of the allocation and the other bit refers to other edge of the allocation of certain cluster. Alternatively, to limit overhead from two-bit indication per cluster, a common two-bit indication may be signaled to the UE which indicates whether or not the UE should apply accordingly guard band for each cluster if the cluster allocation is on the edge of the sub-band where numerology may change according to higher layer configuration. Yet another example is to dimension the higher layer signalling such that K+1 bits correspond to K sub-bands. In this example, bit-map signalling may indicate whether or not to apply guard band in at the subframe border (as discussed MCS can be used as another criterion). Where it is redundant to cover the bandwidth edges by the signaling, K-1 bits may be sufficient.

In one embodiment, apparatus 10 may be controlled by memory 14 and processor 12 to dynamically select guard bands only for UL/DL data channels. Another option is that DL/UL control channels apply guard band always. In certain embodiments, the guard band may be a full PRB (physical resource block comprised of 12 sub-carriers), or one or several adjacent sub-carriers at one side of a PRB. The application of the guard band may be signaled dynamically by apparatus 10 as described above; however, in another embodiment, the usage of guard band may be configured by higher layers.

Fig. 7b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device or NB-IoT device, or the like. As one example, Apparatus 20 may be implemented in, for instance, a wireless handheld device, a wireless plug-in accessory, or the like.

In some example embodiments, apparatus 20 may include one or more processors, one or more computer-readable storage medium (for example, memory, storage, and the like), one or more radio access components (for example, a modem, a transceiver, and the like), and/or a user interface. In some embodiments, apparatus 20 may be configured to operate using one or more radio access technologies, such as GSM, NB-IoT, LTE, LTE-A, 5G, WLAN, WiFi, Bluetooth, NFC, and any other radio access technologies. It should be noted that one of ordinary skill in the art would understand that apparatus 20 may include components or features not shown in Fig. 7b.

As illustrated in Fig. 7b, apparatus 20 may include or be coupled to a processor 22 for processing information and executing instructions or operations. Processor 22 may be any type of general or specific purpose processor. While a single processor 22 is shown in Fig. 7b, multiple processors may be utilized according to other embodiments. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Processor 22 may perform functions associated with the operation of apparatus 20 including, without limitation, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 24 can be comprised of any combination of random access memory (RAM), read only memory (ROM), static storage such as a magnetic or optical disk, or any other type of non-transitory machine or computer readable media. The instructions stored in memory 24 may include program instructions or computer program code that, when executed by processor 22, enable the apparatus 20 to perform tasks as described herein.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, NB-IoT, LTE, LTE-A, 5G, WLAN, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to one embodiment, apparatus 20 may be a UE, mobile device, mobile station, ME, IoT device and/or NB-IoT device, for example. According to certain embodiments, apparatus 20 may be controlled by memory 24 and processor 22 to perform the functions associated with embodiments described herein, such as (but not limited to) the flow chart depicted in Fig. 4. In one embodiment, apparatus 20 may be controlled by memory 24 and processor 22 to receive, from a base station via higher layer configuration, the sub-band specific raster in frequency domain that indicates to the apparatus 20 where there are possible borders between different numerologies potentially requiring guard bands. In certain embodiments, there may be a set of different configurations for the UE.

In one embodiment, the different configurations may correspond to operating bandwidth configurations of apparatus 20 in cases where apparatus 20 does not operate with the same bandwidth as the NR carrier. In this embodiment, apparatus 20 may be controlled by memory 24 and processor 22 to receive the used configuration from the set of different configurations.

In another embodiment, the different configurations may correspond to different multi-numerology sub-band arrangement within the NR carrier. These may be cell specific configurations, as well as UE specific configurations. In this example, apparatus 20 may be controlled by memory 24 and processor 22 to receive, from the base station, the configuration to be applied.

According to some embodiments, there may be the same or different configurations for downlink and uplink. In an embodiment, the higher layer configuration may be time varying so that apparatus 20 is provided with different configuration for different time instants.

According to one embodiment, apparatus 20 may be controlled by memory 24 and processor 22 to receive or to derive the use of guard bands within allocated frequency resources for the reception of downlink data and transmission of uplink data. If apparatus 20 is allocated frequency resources region next to the sub-band border where, according to the above-described configuration, the numerology would change in adjacent frequency resources (i.e., adjacent sub-band), the BS may explicitly indicate to apparatus 20 in downlink control information (DCI) scheduling the downlink transmission and/or uplink transmission whether or not the guard band is applied on the edge subcarriers of the allocation next to the sub-band border (if applied, guard band may be arranged according to pre-defined rules or higher layer configuration).

In an embodiment, in both downlink and uplink transmission, apparatus 20 may be controlled by memory 24 and processor 22 to derive implicitly whether or not use guard band on the sub-band border where numerology would change according to higher layer configuration based on the modulation and coding scheme (MCS) information. There may be MCS specific guard band definitions, such as: QSPK modulation → no guard band, 16QAM/64QAM → N subcarriers guard band where subcarrier spacing may refer to pre-defined reference numerology (and subcarrier spacing).

In an embodiment, apparatus 20 may be controlled by memory 24 and processor 22 to explicitly receive, from the BS, used guard band on the sub-band border where numerology may change. In one example, there may be reserved two bits in DCI for indication (per sub-band) where one bit refers to one edge of the allocation and the other bit refers to other edge of the allocation. These bits may be absent or not used by the apparatus 20 if the allocation in frequency domain is covering the edge resources in the sub-band where numerology may change to another according to higher layer configuration. In another example, there may be a combination of one-bit indication that guard band is used and MCS information which indicates the amount of guards to be applied for DL reception or uplink transmission. In yet another example, explicit signalling may provide an opportunity in a dynamic manner, e.g., to overwrite higher layer configuration and allocate to apparatus 20 the whole bandwidth with one numerology, and apparatus 20 in that case does not need to apply guard bands on sub-band borders where numerology may change according to higher layer configuration.

In another embodiment, apparatus 20 may be controlled by memory 24 and processor 22 to explicitly receive, from the BS via DCI using, e.g., two-bit indication per cluster whether apparatus 20 applies guards on the edges of each clustered allocation where one bit refers to one edge of the allocation and the other bit refers to other edge of the allocation of certain cluster. Alternatively, to limit overhead from two-bit indication per cluster, a common two-bit indication may be signaled to the apparatus 20 which indicates whether or not the apparatus 20 should apply accordingly guard band for each cluster if the cluster allocation is on the edge of the sub-band where numerology may change according to higher layer configuration. Yet another example is to dimension the higher layer signalling such that K+1 bits correspond to K sub-bands. In this example, bit-map signalling may indicate whether or not to apply guard band in at the subframe border (as discussed MCS can be used as another criterion). If it is redundant to cover the bandwidth edges by the signalling, K-1 bits may be sufficient.

In one embodiment, guard bands may be dynamically selected only for UL/DL data channels. In other words, DL/UL control channels (such as PDCCH, PUCCH) overlapping with the sub-band boundaries may follow different functionality. For example, they may not apply guard band at all since they may use low(er) order of modulation. Another option is that DL/UL control channels apply guard band always. The guard band may be a full PRB (physical resource block comprised of 12 sub-carriers), or one or several adjacent sub-carriers at one side of a PRB.

Therefore, embodiments of the invention provide several technical improvements and/or advantages. For example, certain embodiments result in a very small signalling burden (covering both localized and clustered resource allocation option), support dynamic selection between single numerology without guard band and mixed numerology having proper guard band, can be applied to both generation of guard between sub-bands as well as at the edge of the carrier to generate flexible carrier BW, and is free from signaling errors (due to the fact that DL/UL grant is protected by cyclic redundancy check). As such, embodiments of the invention can improve performance and throughput of network nodes including, for example, base stations/eNBs and UEs. Accordingly, the use of embodiments of the invention result in improved functioning of communications networks and their nodes.

In some embodiments, the functionality of any of the methods, processes, signaling diagrams, or flow charts described herein may be implemented by software and/or computer program code or portions of code stored in memory or other computer readable or tangible media, and executed by a processor.

In some embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and include program instructions to perform particular tasks.

A computer program product may comprise one or more computer-executable components which, when the program is run, are configured to carry out embodiments. The one or more computer-executable components may be at least one software code or portions of it. Modifications and configurations required for implementing functionality of an embodiment may be performed as routine(s), which may be implemented as added or updated software routine(s). Software routine(s) may be downloaded into the apparatus.

Software or a computer program code or portions of it may be in a source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other embodiments, the functionality may be performed by hardware, for example through the use of an application specific integrated circuit (ASIC), a programmable gate array (PGA), a field programmable gate array (FPGA), or any other combination of hardware and software. In yet another embodiment, the functionality may be implemented as a signal, a non-tangible means that can be carried by an electromagnetic signal downloaded from the Internet or other network.

According to an embodiment, an apparatus, such as a node, device, or a corresponding component, may be configured as a computer or a microprocessor, such as single-chip computer element, or as a chipset, including at least a memory for providing storage capacity used for arithmetic operation and an operation processor for executing the arithmetic operation.

One embodiment is directed to a method, which may include receiving, by a UE, higher layer configurations about sub-band raster and/or numerology plan over sub-bands for DL and UL. The method may also include receiving higher layer or physical layer indication about the used configuration for DL and/or UL. The method may then include receiving physical layer DL resource allocation and/or receiving physical layer UL resource allocation. The method may further include determining applied guard bands for reception of DL data based on at least one of allocated resources, explicit guard band indication, MCS level and current higher layer subband and numerology plan configuration. The method may also include determining applied guard bands for transmission of uplink data based on at least one of allocated resources, explicit guard band indication, uplink transmit power, MCS level and current higher layer subband and numerology plan configuration.

Another embodiment is directed to an apparatus, which may include at least one processor and at least one memory including computer program code. The at least one memory and computer program code may be configured, with the at least one processor, to cause the apparatus at least to receive higher layer configurations about sub-band raster and/or numerology plan over sub-bands for DL and UL, to receive higher layer or physical layer indication about the used configuration for DL and/or UL. The apparatus may also be caused to receive physical layer DL resource allocation and/or to receive physical layer UL resource allocation. The at least one memory and computer program code may be further configured, with the at least one processor, to cause the apparatus at least to determine applied guard bands for reception of DL data based on at least one of allocated resources, explicit guard band indication, MCS level and current higher layer subband and numerology plan configuration, and to determine applied guard bands for transmission of uplink data based on at least one of allocated resources, explicit guard band indication, uplink transmit power, MCS level and current higher layer subband and numerology plan configuration.

Another embodiment is directed to a method, which may include signaling to one or more UE(s) higher layer configurations about sub-band raster and/or numerology plan over sub-bands for DL and UL. The method may also include signaling to the one or more UE(s) higher layer or physical layer indication about the used configuration for DL and/or UL. The method may then include signaling physical layer DL resource allocation and/or signaling physical layer UL resource allocation to the one or more UE(s).

Another embodiment is directed to an apparatus, which may include at least one processor and at least one memory including computer program code. The at least one memory and computer program code may be configured, with the at least one processor, to cause the apparatus at least to signal to one or more UE(s) higher layer configurations about sub-band raster and/or numerology plan over sub-bands for DL and UL, signal to the one or more UE(s) higher layer or physical layer indication about the used configuration for DL and/or UL, and to signal physical layer DL resource allocation and/or to signal physical layer UL resource allocation to the one or more UE(s).

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention.

## Claims

1. A method comprising:
receiving, by a user equipment, higher layer configurations about a sub-band raster and/or a numerology plan over sub-bands for a downlink and an uplink;
receiving a higher layer or a physical layer indication about a used configuration for the downlink and/or the uplink;
receiving a physical layer downlink resource allocation and/or receiving a physical layer uplink resource allocation;
determining applied guard bands for a reception of downlink data based on at least one of allocated resources, an explicit guard band indication, a modulation and
coding scheme level and the current higher layer sub-band and numerology plan configurations; and
determining applied guard bands for a transmission of uplink data based on at least one of the allocated resources, the explicit guard band indication, an uplink transmit power, the modulation and coding scheme level and the current higher layer sub-band and numerology plan configurations.

2. The method as in claim 1, wherein the higher layer configurations are time varying such that the user equipment is provided with a different configuration for a different time instant.

3. The method as in claim 1 or 2, wherein the guard band is a full physical resource block, or one sub-carrier or several adjacent sub-carriers at one side of a physical resource block.

4. The method as in any one of claims 1-3, wherein the guard bands are dynamically selected only for uplink/downlink data channels.

5. An apparatus, comprising:
means for receiving, by the apparatus, higher layer configurations about a sub-band raster and/or a numerology plan over sub-bands for a downlink and an uplink;
means for receiving a higher layer or a physical layer indication about used configuration for the downlink and/or the uplink;
means for receiving a physical layer downlink resource allocation and/or receiving a physical layer uplink resource allocation;
means for determining applied guard bands for a reception of downlink data based on at least one of allocated resources, an explicit guard band indication, a modulation and coding scheme level and the current higher layer sub-band and
numerology plan configurations; and
means for determining applied guard bands for a transmission of uplink data based on at least one of the allocated resources, the explicit guard band indication, an uplink transmit power, the modulation and coding scheme level and the current higher layer sub-band and numerology plan configurations.

6. The apparatus as in claim 5, wherein the higher layer configurations are time varying such that the user equipment is provided with a different configuration for a different time instant.

7. The apparatus as in claim 5 or 6, wherein size of sub-bands is different from sub-band to sub-band and from configuration to configuration.

8. The apparatus as in any one of claims 5-7, wherein the guard band is a full physical resource block, or one sub-carrier or several adjacent sub-carriers at one side of a physical resource block.

9. The apparatus as in any one of claims 5-8, wherein the guard bands are dynamically selected only for uplink/downlink data channels.

10. An apparatus, comprising:
means for signaling to at least one user equipment higher layer configurations about a sub-band raster and/or a numerology plan over sub-bands for a downlink and an uplink;
means for signaling to the at least one user equipment a higher layer or a physical layer indication about the used configuration for the downlink and/or the uplink;
means for signaling a physical layer downlink resource allocation and/or to signal a physical layer uplink resource allocation to the at least one user equipment; and
means for signaling to the at least one user equipment a use of guard bands within allocated frequency resources for a reception of downlink data and a transmission of uplink data.

11. The apparatus as in claim 10, further comprising:
means for signaling via downlink control information using a two-bit indication per cluster whether the user equipment is to apply guards on edges of each clustered allocation where a first bit refers to one edge of the clustered allocation and a second bit refers to other edge of the clustered allocation.

12. The apparatus as in claim 10, further comprising:
means for signaling signal via downlink control information using a common two-bit indication wherein the two-bit indication is to indicate if the user equipment is to apply a guard band for each cluster allocation if the cluster allocation is on an edge of the sub-band.

13. The apparatus as in any one of claims 10-12, wherein the guard band is a full physical resource block, or one sub-carrier or several adjacent sub-carriers at one side of a physical resource block.

14. A method comprising:
signaling to at least one user equipment higher layer configurations about a sub-band raster and/or a numerology plan over sub-bands for a downlink and an uplink;
signaling to the at least one user equipment a higher layer or a physical layer indication about the used configuration for the downlink and/or the uplink;
signaling a physical layer downlink resource allocation and/or to signal a physical layer uplink resource allocation to the at least one user equipment; and
signaling to the at least one user equipment a use of guard bands within allocated frequency resources for a reception of downlink data and a transmission of uplink data.

15. A computer program, embodied on a non-transitory computer readable medium, comprising instructions which, when the program is executed by a computer, cause the computer to carry out the method according to any one of claims 1 to 4 or 14.
